# EUROPEAN PATENT APPLICATION

(11) **EP 4 763 647 A1**
(43) Date of publication of application: **24.06.2026**
(21) Application number: 24222009.3
(22) Date of filing: 20.12.2024
(51) Int. Cl.: B60W 30/18

(54) **SYSTEM AND METHOD FOR CONTROLLING A POWERTRAIN OF A VEHICLE**

(71) Applicant: Volvo Truck Corporation, 405 08 Göteborg (SE)
(72) Inventor: Schellenberger, Markus, 417 23 Göteborg (SE); Ryberg, Henrik, 417 19 Göteborg (SE); Axelsson, Stefan, 426 69 Västra Frölunda (SE)
(74) Representative: Ex Materia

(57) **Abstract**

The invention concerns a powertrain system (10), comprising:
- an engine (11) connectable to a wheel,
- a clutch (20),
- a geartrain (30) configured to be coupled to a power output shaft (12) of the engine by the clutch, comprising a gearbox output shaft (31) configured to be drivingly connected to the wheel and receive torque from the engine,
- a control unit (40) configured to selectively operate the engine, the clutch, the geartrain in a freewheeling mode, in which the power output shaft is nonrotating and the engine is disconnected from the wheel,
and further configured to:
- in the freewheeling mode, obtain real-time data (50) indicative of a hard braking event from a service brake (13),
- based on the obtained real-time data, send an engaging command (52) to the clutch,
- control the clutch to a target torque transfer position (53).

## Description

### TECHNICAL FIELD

The invention relates in general to a system and method for controlling a powertrain of a vehicle and more specifically during its engine stop freewheeling mode. The invention may find an application in low-duty, medium-duty and heavy-duty road vehicles, such as trucks, busses, or passenger cars.

Such a vehicle may employ an internal combustion engine as a propulsion system to generate mechanical power to be transferred to the drive wheels of the vehicle in response to a command of an operator. In the following, only the drive wheels will be considered, and they will be designated as wheels. Typically, an internal combustion engine is a multi-cylinder internal combustion engine. Fuel is injected into the cylinders of the engine and the combustion operating inside the cylinders enables to produce mechanical power intended to be transmitted, via a transmission line or geartrain, from the output shaft of the engine to the wheels to ensure the vehicle propulsion. To do so, a clutch is placed between the output shaft of the internal combustion engine and the wheels, preferably between the output shaft of the internal combustion engine and the transmission. This clutch is configured to couple and decouple the output shaft of the internal combustion engine and the wheels. When the clutch is engaged, it allows power to transfer from the engine to the geartrain and the wheels. When the clutch is disengaged, it stops the power transfer and allows the internal combustion engine to continue running without transmitting power to the wheels.

Such a vehicle is equipped with actuators and sensors whose role is to monitor the state of the engine, for example its output shaft speed but also other data of the vehicle such as vehicle speed and vehicle operating conditions. The internal combustion engine is also linked with a control unit configured to be in communication with the actuators and the sensors and operatively connected to the internal combustion engine. Such a control unit, based on the information received from the sensors and actuators, is configured to control the internal combustion engine depending on the output torque request. For example, when the internal combustion engine is running, the vehicle speed being zero, the clutch being disengaged, i.e. the output shaft of the internal combustion engine being coupled to the wheels, the pressing of the accelerator pedal by the driver means that an output torque is requested. Following this, the control unit will send a corresponding command to the internal combustion engine to fulfill this request. This can lead at least to provide fuel according to a predefined injection strategy to initiate the combustion to produce a torque in accordance to the output torque request.

There are two main states of the internal combustion engine: the first state is an off-state, in which the speed of the internal combustion engine output shaft is equal to zero, the second state is an on-state, in which the speed of the internal combustion engine output shaft is non-zero. This means that in the off-state, the output shaft of the internal combustion engine is not rotating, and in the on-state, the output shaft of the internal combustion engine is rotating.

For each of these two main states, the vehicle speed can be either zero (the vehicle is stationary) or non-zero (the vehicle is in movement).

An engine stop freewheeling mode is a mode in which the output shaft of the internal combustion engine is not rotating (the internal combustion engine is in its off-state) and it is disconnected from the wheels. This implies that the clutch is disengaged so as to decouple the output shaft of the internal combustion engine and the wheels. In this mode, the vehicle speed is non-zero.

The engine stop-start technology appeared in the previous decade with the aim to reduce fuel consumption. This technology consists in automatically turning off the internal combustion engine (i.e. it is switched into its off-state) when predefined stop conditions of the engine are met and restarting it when predefined start conditions of the engine are met. For example, the internal combustion engine is restarted as soon as the driver lifts his foot off from the brake pedal or presses the clutch pedal, or when other requirements for which the engine should be running are detected. The engine stop-start technology leads to fuel savings in an order of 5 to 10 % depending on the traffic conditions. It results in a significant reduction in CO₂ emissions.

A classic engine stop-start technology is based on re-starting the engine during standstill using the starter motor. The downtime of the engine is also called a 'temporary engine shutdown'.

When the engine stops in a freewheeling mode, the engine is restarted with the clutch, thereby focusing on drivability and driving comfort.

When the engine is shut down, the steering wheel servo pump on the engine's output shaft cannot produce any power at all. Vehicles having the possibility to turn off the engine during the freewheeling mode therefore needs a servo pump getting its power from another source. During a hard braking event or an emergency braking event initiated by the driver via the service brakes, it may occur that the engine cannot restart before the vehicle speed is zero or the vehicle speed approaches the speed for which the steering wheel servo pump on the output shaft of the engine cannot provide enough oil flow to keep an adequate level of steerability.

Therefore, for the sake of driving security, it is desirable to have a powertrain system able to restart the engine after a shutdown as well as to ensure an adequate level of steerability of the vehicle, even in case of a hard braking event. It is to be noted that using the starter motor is not an option as long as the vehicle speed is high, at least for single battery vehicles. The reason is that the system voltage then drops to a level that could affect the electrical system of the vehicle.

The proposed invention falls within this context and proposes a powertrain system enabling a precise clutch control making it possible to control the torque transfer between the internal combustion engine and the wheels. As already mentioned, unless otherwise specified, the term wheels in the description of the invention designates the drive-wheels of the vehicle.

### GENERAL DEFINITION OF THE INVENTION

To this end, one subject of the invention is a powertrain system for a vehicle, the powertrain system being characterized in that it comprises:
- an internal combustion engine connectable to one or more wheels of the vehicle,
- a controllable clutch,
- a geartrain configured to be coupled to a power output shaft of the internal combustion engine by means of the controllable clutch, the geartrain comprising a gearbox output shaft configured to be drivingly connected to at least one wheel of the vehicle and receive torque from the internal combustion engine,
- a control unit configured to selectively operate at least one of the internal combustion engine, the controllable clutch and/or the geartrain in at least an engine stop freewheeling mode, in which the power output shaft of the internal combustion engine is non-rotating and the internal combustion engine is disconnected from the one or more wheels,
wherein the control unit is configured to, in the engine stop freewheeling mode :
- obtain real-time data indicative of an emergency or hard braking event initiated by one or more service brakes of the vehicle,
- based on the obtained real-time data, send an engaging command to the controllable clutch,
- control the controllable clutch to a target torque transfer position.

Thanks to these features, the powertrain system of the invention makes it possible to engage the controllable clutch towards its target position in order to couple the power output shaft of the internal combustion engine to the geartrain for initiating a clutch engine start in a short-time basis. Following a hard or emergency braking event, the internal combustion engine restart is immediately initiated.

As the controllable clutch is controlled to a target torque transfer position, the controllable clutch may change the torque transferred between the internal combustion engine and the wheels. The selective activation of the controllable clutch allows to change a torque transfer between the internal combustion engine (also called ICE) and the one or more wheels.

Thanks to the powertrain system of the invention, the engine restart is initiated in response to real-time emergency braking data with a precise clutch control.

Real-time data may comprise at least a series of two couples of data, each couple comprising a brake pedal position and the timestep at which this brake pedal position is achieved. Two successive brake pedal positions achieved within a very short-time basis (in the order of a few milliseconds) means a hard braking or emergency event. The real-time data may alternatively comprise data from a pressure sensor on the hydraulic circuit connected to the brake pedal. A pressure peak in the hydraulic circuit, i.e. a sudden pressure increase, is indicative of a hard braking event from the driver.

The target torque transfer position is a constant. It is independent of gear and vehicle speed. For each specific clutch position, the transferred torque is known. The target torque transfer position may for example be taken from a clutch torque characteristic diagram.

According to an optional feature of the invention, the control unit is further configured to monitor the controllable clutch at or near the target torque transfer position for a predefined duration.

The monitoring of the controllable clutch close to or at its target position for a defined amount of time aims at verifying if the controllable clutch has reached its target position. Parallel to this monitoring, the speed of the power output shaft is also monitored to identify the restart, or not, of the internal combustion engine. A successful restart of the internal combustion engine is operated once the controllable clutch has reached its target position and the power output shaft has a non-zero rotational speed.

According to an optional feature of the invention, the control unit is further configured to send a disengaging command to the controllable clutch if the power output shaft does not reach a predetermined speed within the predefined duration, thereby aborting the restart of the internal combustion engine.

If the previous condition is not fulfilled within the predefined duration, that is to say if the controllable clutch has reached its target position and the power output shaft has a zero rotational speed, the power output shaft speed has not reached a level where an engine start is physically possible. The attempt for restarting the internal combustion engine should be aborted, and the controllable clutch is disengaged as fast as possible. This impacts the vehicle stability as little as possible, even if the restart attempt failed. After a certain amount of time has passed, a second and if necessary a third attempt of restarting the internal combustion engine may be initiated.

According to an optional feature of the invention, the control unit is configured to receive an indication of wheel slip caused by the service brakes and/or the engagement of the controllable clutch and disregard the indication of wheel slip when sending the engaging command to the controllable clutch.

The control unit is informed of the wheel slip caused by the service brakes and/or the controllable clutch engagement. Nevertheless, it is configured to not consider it. It means that the control unit proceeds further as if no such wheel slip occurs. This feature aims at avoiding that the control unit generates a command for an emergency disengagement of the controllable clutch whereas a restart of the internal combustion engine using the controllable clutch is initiated and prioritized, even if a slip is detected.

According to an optional feature of the invention, the control unit is configured to receive a value of the power output shaft speed and, if the received value of the power output shaft speed is non-zero, send a command of fuel injection into the internal combustion engine to an injection device of the internal combustion engine.

Further to the engagement of the controllable clutch towards its target position in order to couple the power output shaft of the internal combustion engine to the geartrain for initiating a clutch engine start, the output shaft starts to rotate. At this stage, the engine may not necessarily be running yet. Indeed, disengaging the controllable clutch again may lead to the engine speed drop, unless fuel is injected. The control unit is configured to capture such a situation and send the command of fuel injection to get the engine speed to increase. The command of fuel injection is related to a command of air intake. In other words, the control unit is configured to send the command of fuel injection and a command of adapting the intake air flow for combustion to occur. Indeed, the controllable clutch might not physically be able to make the engine speed increase due to the high amount of slip present at the driving wheel axle. The controllable clutch might get the engine to start rotate up to a point where fuel injection theoretically is possible whereas combustion (due to the following fuel injection) might operate to actually increase the engine speed towards a level where it is reasonable for the engine control unit to maintain it without the controllable clutch, due to continuous fuel injection (in most case it is referred to as engine idle speed).

In other words, the control unit enables the fuel injection as soon as a rotation on the engine side is detected to achieve the engine speed up to a desired speed.

According to an optional feature of the invention, the control unit is configured to send the command of fuel injection if a power output on the output shaft can be measured during a clutch engine start with emergency braking.

The engine control unit might be configured to send in advance at the very beginning of the clutch engine start the command for fuel injection, as it is already known at this point that fuel injection might be required (due to the brake request/active service brakes).

Further to the restart of the internal combustion engine, it is necessary to provide each cylinder of the internal combustion engine with fuel. After receiving the information of the internal combustion engine restart, the control unit sends a command to the injection device to proceed with the fuel injection in the cylinders of the internal combustion engine.

According to an optional feature of the invention, the control unit is configured to receive identification data from cylinders of the internal combustion engine and, if the received value of the power output shaft speed is non-zero, send an instruction being part of a fuel injection strategy to the injection device of the internal combustion engine, said instruction being adapted to each cylinder.

This fine tuning of the injection process into each cylinder depending on its previous state makes it possible to ensure the right course of combustion, ensuring the requested torque on the power output shaft. Additionally, taking into account the previous state of each cylinder guarantees that the pollutant level will not be increased even if the internal combustion engine is restarted after the hard or emergency braking event.

According to an optional feature of the invention, the control unit is configured to receive the vehicle speed from an auxiliary speed sensor, preferably from a GNSS system embedded into the vehicle.

During a hard or emergency braking event, the information from the wheel sensors can potentially become quite unreliable. The values provided by the wheel sensors may be incorrect values, that is to say close to or below the defined vehicle speed triggering an engine start with the starter motor even though the vehicle still moves with a higher speed as the speed provided by the wheel sensors. An auxiliary speed sensor, like a GNSS system, provides the control unit with an accurate vehicle speed and enables to avoid such incorrect estimation of the vehicle speed.

According to an optional feature of the invention, the control unit is configured to set the internal combustion engine, the controllable clutch, the geartrain in the engine stop freewheeling mode if the vehicle speed is greater than a predefined speed threshold, said predefined speed threshold being a function of the ratio between the gearbox output shaft speed and the power output shaft speed.

When the vehicle speed is greater than the predefined speed threshold, it means that the kinetic energy of the vehicle is high enough to ensure the internal combustion engine restart using the controllable clutch and that the powertrain system may be placed in the engine stop freewheeling mode.

This means also that if the vehicle speed cannot be maintained above the predefined speed threshold after the shutdown of the internal combustion engine, the internal combustion engine shall be restarted.

The invention also covers a vehicle comprising one or more wheels and a such a powertrain system connectable to at least one of the one or more wheels.

The invention also relates to a method for controlling a powertrain system of a vehicle, the powertrain system comprising:
- an internal combustion engine connectable to one or more wheels of the vehicle,
- a controllable clutch,
- a geartrain configured to be coupled to a power output shaft of the internal combustion engine by means of the controllable clutch, the geartrain comprising a gearbox output shaft configured to be drivingly connected to at least one wheel of the vehicle and receive torque from the internal combustion engine,
- a control unit configured to selectively operate at least one of the internal combustion engine, the controllable clutch, the geartrain in at least an engine stop freewheeling mode, in which the power output shaft of the internal combustion engine is non-rotating and the internal combustion engine is disconnected from the one or more wheels,
the method for controlling the powertrain system being characterized in that it comprises, in the engine stop freewheeling mode, the steps of
- obtaining real-time data indicative of an emergency or hard braking event initiated by one or more service brakes of the vehicle,
- based on the obtained real-time data, sending an engaging command to the controllable clutch,
- controlling the controllable clutch to a target torque transfer position.

The technical effects of the features of the method for controlling a powertrain system of the invention and the resulting advantages are identical to those described above for the powertrain system and explained in the detailed description below, and they will not be repeated here.

According to an optional feature of the invention, the method comprises the step of monitoring the controllable clutch at or near the target torque transfer position for a predefined duration.

According to an optional feature of the invention, the method comprises the step of sending a disengaging command to the controllable clutch if the power output shaft does not reach a predetermined speed within the predefined duration, thereby aborting the restart of the internal combustion engine.

According to an optional feature of the invention, the method comprises the step of disregarding an indication of wheel slip caused by the service brakes and/or the engagement of the controllable clutch when sending the restart command to the internal combustion engine.

According to an optional feature of the invention, the method comprises the step of sending a command of fuel injection into the internal combustion engine to an injection device of the internal combustion engine if a value of the power output shaft speed is non-zero.

According to an optional feature of the invention, the method comprises the step of sending an instruction being part of a fuel injection strategy to the injection device of the internal combustion engine, said instruction being adapted to each previously identified cylinder, if the received power output shaft speed is non-zero.

According to an optional feature of the invention, the method comprises the step of setting the internal combustion engine, the controllable clutch, the geartrain in the engine stop freewheeling mode if the vehicle speed is greater than a predefined speed threshold, said predefined speed threshold being a function of the ratio between the gearbox output shaft speed and the power output shaft speed.

### BRIEF DESCRIPTION OF THE FIGURES

Further features, details and advantages of the invention will become apparent upon reading the description given with reference to the appended drawings, which are given by way of example and in which:
Figure 1 is a perspective view of a vehicle comprising the powertrain system according to the invention ;
Figure 2 schematically illustrates a powertrain system for a vehicle according to the invention ;
Figure 3 is a flowchart representing the step of a method for controlling a powertrain system of a vehicle according to the invention.

### DETAILED DESCRIPTION OF THE INVENTION

The characteristics, variants and various embodiments of the invention, as they have been described or as they will be presented in the detailed description which follows, can be associated with each other, according to various combinations, to the extent that they are not incompatible or exclusive with respect to each other. In particular, it will be possible to imagine variants of the invention comprising only a selection of characteristics described subsequently isolated from the other characteristics described, if this selection of characteristics is sufficient to confer a technical advantage and/or to differentiate the invention compared to the prior art.

For the sake of clarity, the same elements are designated by the same references in the different figures.

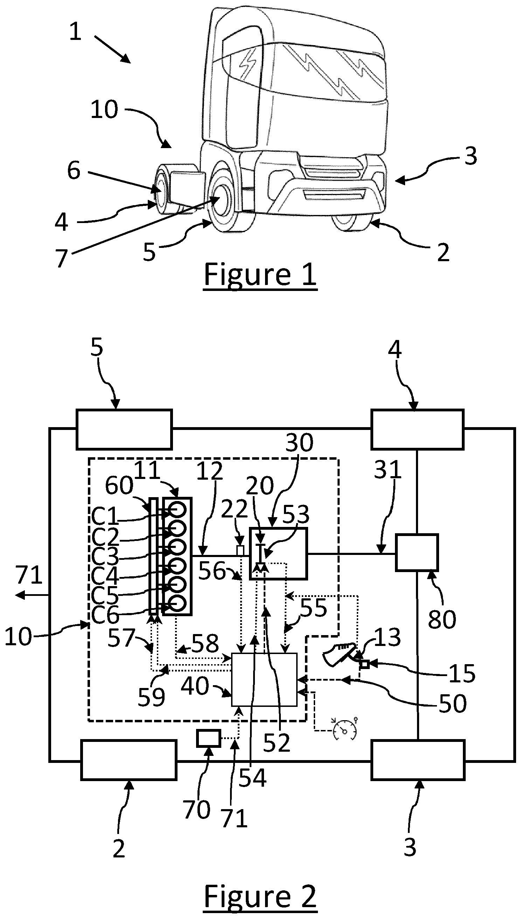

Figure 1 is a perspective view of a vehicle 1 comprising the powertrain system 10 according to the invention. The vehicle 1 is a truck. The truck 1 comprises two axles 6, 7, respectively a rear axle 6 and a front axle 7. In an alternative embodiment, the truck 1 may comprise one or more additional front or rear axle(s).

Each axle supports two wheels, one at each of the extremity of the axle. It is to be noted that the axle may support more than two wheels, for example four wheels with two wheels on each side. In the example depicted in Figure 1, the rear axle 6 supports a first wheel 4 on one end and a second wheel 3 (not visible) on the other end. In this disclosure, for the sake of simplifying the description of the invention, it will be considered that the wheels 3, 4 of the rear axle are the drive-wheels. As it will be explained, the drive-wheels 3, 4 are connectable to the internal combustion engine via a driveline. This means that the truck 1 is a propulsion vehicle (i.e. only the rear axle is motorized). Nevertheless, the invention also applies to any vehicle in which the drive-wheels are supported by the rear axle, the front axle or both.

In the following of the description of the invention and unless otherwise specified, the term "wheel" will designate a drive-wheel.

The invention covers specifically the powertrain system for a vehicle such as the truck 1. The invention also covers a vehicle comprising one or more wheels and such a powertrain system connectable to at least one of the one or more wheels.

Figure 2 schematically illustrates a powertrain system 10 for a vehicle according to the invention. The powertrain system 10 comprises an internal combustion engine 11. The internal combustion engine 11, also defined by its abbreviation ICE, comprises a plurality of cylinders, for example (but not limited to) six cylinders C1, C2, C3, C4, C5, C6, each defining a combustion chamber. When the ICE 11 is running, in each cylinder C1, C2, C3, C4, C5, C6, a piston is moving up and down according to a well-defined sequence while fuel is injected into the cylinder according to an injection strategy.

Further to its mixture with air and after initiating an ignition (either auto-ignition or spark-ignition depending on the type of the engine), combustion takes place. The pistons of the ICE are connected to a crankshaft (not represented). The crankshaft is an elongated piece linked to the bottom end of the pistons. The crankshaft converts the vertical movement of the pistons inside the cylinders into a rotational movement, thereby transforming the energy derived from the combustion inside the cylinders into mechanical energy available on the output shaft 12 of the ICE 11 (also called power output shaft 12). The ICE 11 is described here as an example and the invention is not limited to this example. The invention applies to any ICE configured to deliver a torque on its output shaft.

The ICE 11 is connectable to one or more wheels 2, 3, 4, 5 of the vehicle 1, for example the truck 1 presented in Figure 1. As already mentioned, the invention will be explained with a configuration in which the ICE 11 is connectable to the wheels 3, 4. Nevertheless, a person skilled in the art will understand further reading the description of the invention that the powertrain system 10 of the invention may be applied similarly to any other configurations.

The powertrain system 10 comprises a controllable clutch 20. The controllable clutch may be configured as a disc clutch, a one-way clutch, or another clutch arrangement.

The powertrain system 10 further comprises a geartrain 30 configured to be coupled to the power output shaft 12 of the internal combustion engine 11 by means of the controllable clutch 20. The geartrain 30 comprises a gearbox output shaft 31 configured to be drivingly connected to the wheels 3, 4 of the vehicle and receive torque from the ICE 11. A differential 80 may be connected between the gearbox output shaft 31 and a driveshaft drivingly connected to the wheels 3, 4. The differential 80 remedies the problems caused by the fact that when driving in a curve, the wheels on the outside of the directional curve have further to travel than those on the inside. Similarly, even in a straight line, the distance covered by each wheel might vary depending on differences in inflation, wear, ... The role of the differential is to compensate for these differences. More precisely, the differential distributes the torque arriving through the planetary set to the wheels in accordance with the driving situation. The differential 80 is well known in the prior art and will not be discussed further in this disclosure.

The geartrain 30 is a mechanism whose role is to coordinate the rotation speed of the power output shaft 12 and the rotation speed of the wheels 3, 4. When coupled to the power output shaft 12 of the ICE 11, the geartrain 30 receives a torque from the ICE 11 and delivers another torque on its output shaft 31, called gearbox output shaft 31. To do so, the geartrain 30 may comprise one or more differential gearsets and activatable clutches able to realize a torque transfer in various gear states over a range of speed ratios between the ICE 11 and the gearbox output shaft 31.

The coupling between the power output shaft 12 and the geartrain 30 is performed by the controllable clutch 20. The selective activation of the controllable clutch 20 will be detailed below.

The powertrain system 10 comprises a control unit 40 configured to selectively operate at least one of the ICE 11, the controllable clutch 20, the geartrain 30 in at least an engine stop freewheeling mode. In the engine stop freewheeling mode, the power output shaft 12 is non-rotating and the ICE 11 is disconnected from the wheels 3, 4. In other words, the engine stop freewheeling mode corresponds to the situation in which the ICE 11 is in its off-state (the speed of the internal combustion engine output shaft is equal to zero) and the controllable clutch 20 is disengaged or in an open state (meaning that the ICE 11 is not connected to the geartrain 30). The vehicle is in movement, i.e. the vehicle speed differs from zero.

The control unit 40 is configured to be in communication with actuators and sensors installed in the vehicle and to receive signals from the sensors and to send commands to the actuators to achieve required actions. The received signals enable to monitor the vehicle state and vehicle operating conditions and initiate actions by sending commands to the actuators when necessary. The control unit 40 is therefore in communication with elements of the powertrain system 10, i.e. the ICE 11, the controllable clutch 20 and/or the geartrain 30.

The communication between the control unit 40 and the other elements of the powertrain system 10 is realized through sensor signals and actuator commands. The transmission of signals and commands to and from the control unit 40 is performed by known communication means, such as wired connection, wireless connection, local area network bus, serial peripheral interface bus, etc. For these purposes, the control unit 40 may comprise at least one processor. Under the term processor, it should be understood at least one of a processor, microprocessor, Application Specific Integrated Circuit (also known under its acronym ASIC), electronic circuit, central processing unit. The control unit 40 may comprise at least one memory component (read only, programmable read only, random access, hard drive, etc.) able to store machine readable instructions accessible by the processor to provide the desired functionality. Such a control unit 40 is known in the prior art and will not be detailed further.

Therefore, the invention relies on a control unit 40 that is configured to receive inputs from sensors and send commands to elements of the powertrain system 10 based on the instructions stored on the control unit 40.

According to the invention, the control unit 40 is configured to, in the engine stop freewheeling mode, obtain real-time data 50 indicative of an emergency or hard braking event initiated by one or more service brakes 13 of the vehicle.

In the following, the example of a service braking event coming from a break pedal will be detailed. It is to be noted that service brakes can be activated by other systems as well. A further example is the adaptative cruise control system, also known as ACC, that enables to maintain a preset distance from a vehicle in front.

As an example, the brake pedal 13 provides a signal input including a brake pedal position indicating a driver request for vehicle braking. When the driver proceeds with a hard braking or an emergency braking, he/she presses suddenly the brake pedal 13. The vehicle comprises a sensor 15 of the brake pedal position that is configured to retrieve the brake pedal position. The sensor 15 of the brake pedal is configured to retrieve the brake pedal position for each updated position of the brake pedal. This means that the sensor 15 of the brake pedal may collect each new position of the brake pedal.

Advantageously, the sensor 15 of the brake pedal is configured to retrieve the timestep at which the updated position is achieved. Alternatively, each updated position of the brake pedal is sent to the control unit 40 and the control unit 40 associates each updated position of the brake pedal to the timestep at which the updated position is achieved.

This means that the real-time data 50 comprises at least a series of two couples of data, each couple comprising a brake pedal position and the timestep at which this brake pedal position is achieved. The real-time data 50 may alternatively comprise a violent depression of the brake pedal. Following this, as an example, when two successive brake pedal positions are achieved within a very short-time basis (in the order of a few milliseconds), it is indicative of a hard braking or emergency event. Similarly, a violent depression of the brake pedal, that is to say when the driver presses the brake pedal fast and hard, it is also indicative of a hard braking or emergency event. Another example can be data retrieved from a pressure sensor on the hydraulic circuit connected to the brake pedal. A pressure peak, i.e. a sudden pressure increase, is indicative of a hard braking event from the driver.

Further to an emergency or hard braking event involving the service brake(s) of the vehicle, the real-time data 50 indicative of such an event are transmitted to the control unit 40. The real-time data 50 may also include indications that the hard or emergency braking event is over. Following the example of the brake pedal being pressed, it means that the control unit 40 receives an updated brake pedal position indicative of a brake pedal 13 being released by the driver.

Based on the obtained real-time data 50, the control unit 40 is configured to send an engaging command 52 to the controllable clutch 20. The engaging command 52 is a signal sent to the controllable clutch 20 to couple the power output shaft 12 to the geartrain 30. The engaging command 52 is a command of the controllable clutch 20 to engage with the geartrain 30 so as to couple the power output shaft 12 of the ICE 11 and the geartrain 30. The aim of sending the engaging command 52 is to initiate a restart of the ICE 11 using the controllable clutch 20 so as to engage the controllable clutch 20 as fast as possible towards its target position for a clutch engine start.

Further to the emission of the engaging command 52 by the control unit 40, an actuator of the controllable clutch 20 receives the engaging command 52 and actuates the controllable clutch 20 to engage and couple the power output shaft 12 to the geartrain 30. As the vehicle speed is non-zero, the ICE 11 restart using the controllable clutch 20 is obtained when the ICE 11 is turned over by the driving wheels 3, 4 and elements of the geartrain 30 linked to the wheels 3, 4 and the ICE 11 by the intermediate of its power output shaft 12. The step of engaging and disengaging the controllable clutch 20 is performed by the actuator or the controllable clutch 20 as a response to the engaging command 52. This step corresponds to a step of restarting the ICE 11 using the controllable clutch 20.

For the sake of clarification, when actuating the controllable clutch 20, the controllable clutch is said to be 'engaged' in this context. But it should be mentioned that the controllable clutch will not be fully engaged for the engine restart, it remains in a semi-engaged position.

During the step of restarting the ICE 11 using the controllable clutch 20, the control unit 40 is further configured to control the controllable clutch 20 to a target torque transfer position 53. Controlling the controllable clutch 20 to a target torque transfer position 53 allows the controllable clutch 20 to change a torque transfer between the ICE 11 and the wheels 3, 4. Therefore the controllable clutch 20 is configured to switch to a target position in relation to the geartrain 30. As the controllable clutch couples the power output shaft 12 and the geartrain 30 and the gearbox output shaft is drivingly connected to the wheels 3, 4, the controlled positioning of the controllable clutch 20 enables to control the torque transfer between the ICE 11 and the wheels 3, 4.

The target torque transfer position is a constant. It is independent of gear and vehicle speed. It is set to give a distinct acceleration of the engine providing a distinct engine restart. The transferred torque for a specific clutch position is known. Advantageously, the target torque transfer position is taken from a clutch torque characteristic diagram.

The powertrain system 10 of the invention ensures that the ICE is restarted using the controllable clutch 20. Thanks to the controlled positioning of the controllable clutch 20 during the ICE restart, the ICE restart is performed in a way giving priority to getting the ICE up and running again as fast as possible after the hard or emergency braking event, without any other compromises except vehicle stability.

Indeed, as the controllable clutch 20 is controlled to a target torque transfer position 53, the ICE restart is ensured before the vehicle speed is set to zero or tends to a low value leading to steerability difficulties. To be more precise, the clutch target position is equal for both emergency braking and non-braking situations. What differs is the speed of the clutch to reach this position. In a non-braking situation, the clutch will be engaged slower prioritizing driver comfort during a clutch engine start. In an emergency braking situation, driver comfort is disregarded, prioritizing getting the engine up and running as fast as possible again. Hence, the clutch is moved to its determined target position as fast as physically possible. The speed at which the target torque transfer position is achieved may vary depending on the situation in which the vehicle is. In an emergency braking situation, this speed is higher than in a non-braking situation.

According to an optional feature of the invention, the control unit 40 is further configured to monitor the controllable clutch 20 at or near the target torque transfer position 53 for a predefined duration. To do so, the controllable clutch 20 may be equipped with a position sensor configured to send the position of the controllable clutch 20. In the vicinity of the target position, the position of the controllable clutch 20 is sent to the control unit 40 during the predefined duration, so as to be monitored. The predefined duration may be of the order of milliseconds or a few seconds. This monitoring is performed to check the status of the positioning of the controllable clutch 20 in regard to its target position 53. At the same time, the control unit 40 monitors the restarting of the ICE 11, for example by monitoring the rotation speed 56 of the power output shaft 12 indicative of a successful restart of the ICE 11. The rotation speed of the power output shaft 12 may be transmitted by a speed sensor 22 disposed on the power output shaft 12 to the control unit 40.

The control unit 40 is further configured to send a disengaging command 54 to the controllable clutch 20 if the power output shaft 12 does not reach a predetermined speed within the predefined duration. Further to the monitoring of the controllable clutch 20 at or near its target torque transfer position 53, if the rotation speed 56 of the power output shaft 12 is not high enough after the predetermined duration, it means that the power output shaft 12 could not reach a predetermined speed for which an ICE restart is physically possible. In that situation, the restart of the ICE 11 is not possible. The control unit 40 sends the disengaging command 54 to the actuator of the controllable clutch 20 to disengage the controllable clutch 20 as fast as possible. This results in an aborting of the restart of the ICE 11. This feature aims at reducing the impact on the vehicle stability and comfort.

The control unit 40 may also be configured to resend an engaging command 52 of the controllable clutch 20 after a predefined duration after the aborting of the restart of the ICE 11. This constitutes a second attempt of restarting the ICE 11. If the power output shaft 12 reaches the predetermined speed for which the restart of the ICE 11 is physically possible, the restart attempt is successful. If not, the control unit 40 sends again a disengaging command 54 to the actuator of the controllable clutch 20 to disengage the controllable clutch 20 as fast as possible. The restart of the ICE 11 fails. After another predefined duration after the aborting of the second restart attempt, a third restart attempt may be initiated by the control unit 40.

According to an optional feature of the invention, the control unit 40 is configured to receive an indication 55 of wheel slip caused by the service brakes 13 and/or the engagement of the controllable clutch 20 and to disregard the indication 55 of wheel slip when sending the engaging command 52 to the controllable clutch 20.

Wheel slip occurs when the rotational speed of the wheels decreases, which can lead to a wheel lock if not counteracted. In general, the inertia of the engine creates resistance that can lead to wheel slip during a clutch engine start. However, if the service brakes are applied, the wheels are more exposed to slip purely from the service brakes itself, especially on slippery surface. Under such circumstances, it is hard to determine for the control unit 40 what the cause of the slip is. To avoid disturbance, the wheel slip detection will be passive during a clutch engine start with an emergency braking event.

This feature avoids an emergency disengagement of the controllable clutch 20. As already mentioned, the objective of the invention is to prioritize the restart of the ICE as fast as possible to ensure the steerability of the vehicle.

According to an optional feature of the invention, the control unit 40 is configured to receive a value 56 of the power output shaft 12 speed. The value 56 of the rotational speed of the power output shaft 12 may be provided by the speed sensor 22 disposed on the power output shaft 12. The value 56 is an indication of whether the ICE 11 is restarted or not. If the value 56 is non-zero, it means that the power output shaft is rotating, the ICE 11 is restarted. If the value 56 is zero, it means that the power output shaft is not rotating, the ICE 11 is in its off-state.

If the received value 56 of the power output shaft 12 speed is non-zero, it means that the ICE 11 is restarted. After the coupling of the power output shaft of the internal combustion engine to the geartrain (following the engagement of the controllable clutch towards its target position in order), a clutch engine start is initiated. The output shaft is rotating. Nevertheless, this rotation of the output shaft does not imply that the engine is running. The further disengagement of the controllable clutch can be followed by an engine speed drop. The control unit 40 of the invention is configured to send the command of fuel injection to increase the engine speed at a certain level, once the output shaft of the ICE is connected to the wheels. It means that the control unit of the invention is configured to send the command of fuel injection if the received value 56 is non-zero and a power output is requested. The control unit might also be configured to send the command of fuel injection in advance, i.e. when the clutch engine start is initiated, to provide fuel to the cylinders when required.

Further on, there is a need to feed the ICE 11 with fuel to enable the ICE 11 running and providing torque on its power output shaft 12. The control unit 40 is configured to send a command 57 of fuel injection into the ICE 11 to an injection device 60 of the ICE 11. This command 57 may be sent directly to the injection device 60 to start the fuel injection into the ICE 11, or the vehicle may comprise a dedicated processor storing the injection strategy of the ICE 11 and the command 57 is sent to the dedicated processor that actuates the injection device 60 to proceed with the fuel injection.

According to an optional feature of the invention, the control unit 40 is configured to receive identification data 58 from cylinders C1, C2, C3, C4, C5, C6 of the ICE 11. The identification data 58 may comprise, for each cylinder, the state of combustion before the previous shutdown of the ICE 11. When the ICE 11 is running, combustion occurs in all the cylinders C1, C2, C3, C4, C5, C6. Nevertheless, the combustion is at a different stage depending on the considered cylinder. A four-stroke cycle ICE uses four distinct piston strokes (intake, compression, power, and exhaust) to complete one operating cycle. When considering a stage of the combustion process, for example the intake, such stage may occur in the cylinders in the following order: C1-C5-C3-C6-C2-C4. This implies that the injection process does not occur at the same time for all cylinders.

If the received value 56 of the power output shaft speed is non-zero, it means that the ICE 11 is running and requires fuel injection in its cylinders. Thanks to the identification data 58, the control unit 40 can send an instruction 59 being part of a fuel injection strategy to the injection device 60 of the ICE 11, said instruction being adapted to each cylinder C1, C2, C3, C4, C5, C6. As the control unit 40 has the identification data 58 from cylinders C1, C2, C3, C4, C5, C6 of the ICE 11, the control unit 40 is able to identify the state of each cylinder and adapt the fuel injection strategy. In other words, the control unit 40 is configured to use stored cylinder identification data from the previous ICE shutdown to adapt the fuel injection. It means that the instruction 59 sent from the control unit 40 to the injection device 60 comprises the command to which cylinder injection should be performed, according to a predefined timing. From this, it follows that in each cylinder, the fuel is injected in a quantity and at a timestep according to the sequence defined in the injection strategy. The fuel injection timing is enhanced, thereby leading to an optimal combustion process.

According to an optional feature of the invention, the control unit 40 is configured to receive the vehicle speed 71 from an auxiliary speed sensor 70. This auxiliary speed sensor 70 may be a GNSS system (abbreviation of Global Navigation Satellite System) embedded into the vehicle. A GNSS system provides positioning, navigation and time reference services. Based on the positioning data and the time data, it enables to provide the driver as well as the control unit 40 with the vehicle speed 71. This feature enables to monitor the vehicle speed 71. It is of particular importance since the speed sensors in the wheels of the vehicle may potentially become quite unreliable during the hard or emergency braking event. As the value from the wheel sensors may be incorrect, it could lead to dysfunction in the management of the restart or shutdown of the ICE 11. For example, if this value comes inaccurately close to or below a predefined vehicle speed for which an ICE restart is expected, it may lead to the triggering of the ICE restart with a starter motor even though the vehicle itself still moves with a higher speed. Thanks to the provision of the vehicle speed 71 by means of the auxiliary speed sensor 70 providing approved vehicle speed, such dysfunctions are avoided. It ensures a right level of stability of the vehicle.

According to an optional feature of the invention, the control unit 40 is configured to set the ICE 11, the controllable clutch 20, the geartrain 30 in the engine stop freewheeling mode if the vehicle speed 71 is greater than a predefined speed threshold. As a reminder, it means that the ICE 11 is shut down and the controllable clutch 20 is disengaged. The predefined speed threshold is a function of the ratio between the gearbox output shaft 31 speed and the power output shaft 12 speed.

This feature makes it possible to consider the general vehicle speeds to set the powertrain system 10 in the engine stop freewheeling mode. The vehicle speed needs to be above a predefined limit dependent on the total ratio of the drivetrain. Doing so, it is ensured that there is enough kinetic energy available on the drivetrain for the controllable clutch 20 to get the ICE 11 start spinning even under unfavorable circumstances. If the minimum required vehicle speed cannot be maintained during a temporary ICE shutdown, the ICE shall be restarted. It can be noted that the total vehicle weight and axle load do not have a major impact, as the ABS systems (abbreviation of Anti-lock Braking System) applies brake pressure based on the measured wheel slip.

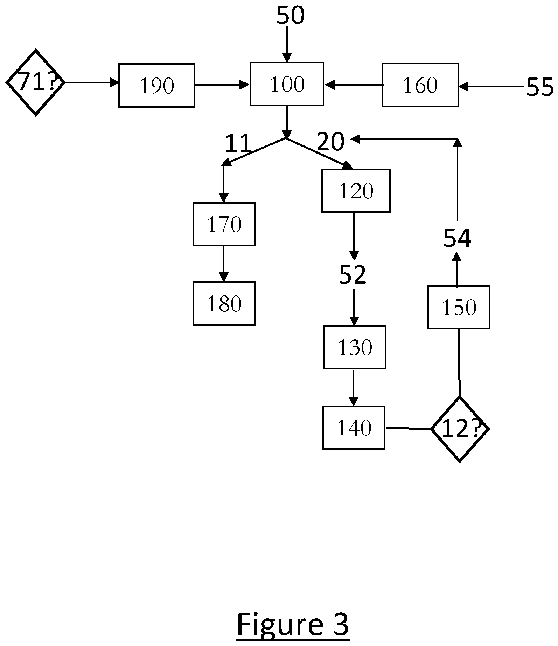

Figure 3 is a flowchart representing the step of a method for controlling a powertrain system 10 of a vehicle according to the invention. As detailed previously, the powertrain system 10 comprises an internal combustion engine 11 connectable to one or more wheels 3, 4 of the vehicle, a controllable clutch 20, a geartrain 30 configured to be coupled to a power output shaft 12 of the internal combustion engine 11 by means of the controllable clutch 20. The geartrain 30 comprises a gearbox output shaft 31 configured to be drivingly connected the wheels 3, 4 of the vehicle and receive torque from the internal combustion engine 11. The powertrain system 10 comprises a control unit 40 configured to selectively operate at least one of the internal combustion engine 11, the controllable clutch 20, the geartrain 30 in at least an engine stop freewheeling mode, in which the power output shaft 12 is non-rotating and the internal combustion engine 11 is disconnected from the wheels 3, 4.

According to the invention, the method for controlling the powertrain system 10 comprises, in the engine stop freewheeling mode, the step 100 of obtaining real-time data 50 indicative of an emergency or hard braking event initiated by one or more service brakes 13 of the vehicle. Based on the obtained real-time data 50, the method of the invention comprises the step 120 of sending an engaging command 52 to the controllable clutch 20. The method also comprises the step 130 of controlling the controllable clutch 20 to a target torque transfer position 53.

The step 120 aims at engaging the controllable clutch 20 as fast as possible towards its target position in order to couple the power output shaft 12 of the ICE 11 to the geartrain 30 for initiating a clutch engine start.

The step 130 of controlling the controllable clutch 20 to a target torque transfer position 53 constitutes a selective activation of the controllable clutch 20. By controlling the controllable clutch 20 to a target torque transfer position 53, the controllable clutch 20 may change the torque transfer between the ICE 11 and the wheels 3, 4. The target torque transfer position is a known value, that is usually taken from a clutch torque characteristic diagram. In an emergency braking situation, the controllable clutch is moved to its determined target position as fast as physically possible, so as to ensure the engine restart as fast as possible again. It follows that the controlled positioning of the controllable clutch 20 offers the possibility to control the torque transfer between the ICE 11 and the wheels 3, 4.

The method for controlling the powertrain system 10 according to the invention ensures that the ICE 11 is restarted using the controllable clutch 20 based on the rotation of the gearbox output shaft. The ICE restart is prioritized so as to get the ICE running again as fast as possible after the hard or emergency braking event. To do so, the positioning of the controllable clutch 20 may be controlled if necessary during the ICE restart, thereby ensuring the vehicle stability.

According to an optional feature of the invention, the method for controlling the powertrain system 10 comprises the step 140 of monitoring the controllable clutch 20 at or near the target torque transfer position 53 for a predefined duration.

As detailed above, the controllable clutch 20 may be equipped with a position sensor configured to capture the position of the controllable clutch 20. The method of the invention may further comprise the step of sending to the control unit 40 the position of the controllable clutch 20, when the position is in the vicinity of the target position. This step of sending the position of the controllable clutch 20 is performed during a predefined duration (for example some milliseconds), so as to be monitored. The step 140 of monitoring the controllable clutch 20 is performed to check whether the controllable clutch 20 reaches its target position 53 within a duration which should be less than the predefined duration.

According to an optional feature of the invention, the method for controlling the powertrain system 10 comprises the step 150 of sending a disengaging command 54 to the controllable clutch 20 if the power output shaft 12 does not reach a predetermined speed within the predefined duration, thereby aborting the restart of the internal combustion engine 11.

For this purpose, the method of the invention may comprise a step 140 of monitoring the rotation speed 56 of the power output shaft 12. The rotation speed 56 of the power output shaft 12 indicates the restart of the ICE 11 if its value becomes non-zero. The step of monitoring the rotation speed 56 of the power output shaft 12 is performed by the use of a speed sensor 22 disposed on the power output shaft 12 and sent to the control unit 40.

Further to the step 140 of monitoring the controllable clutch 20 at or near its target torque transfer position 53, and together with the step of monitoring the rotation speed 56 of the power output shaft 12, if the control unit 40 receives a rotation speed 56 which differs from the predetermined speed even after the predefined duration of the controllable clutch 20 being near or at its target position, this means that the power output shaft 12 could not reach a predetermined speed for which an ICE restart is physically possible. The restart of the ICE 11 is not possible. The control unit 40 sends the disengaging command 54 to the actuator of the controllable clutch 20 to disengage the controllable clutch 20 as fast as possible. The restart of the ICE 11 is aborted.

The method for controlling the powertrain system 10 of the invention may comprise, after a predetermined duration, the steps of performing again the step 120 of sending the engaging command 52 to the controllable clutch 20, the step 130 of controlling the controllable clutch 20 to a target position 53, the step 140 of monitoring the controllable clutch 20 at or near the target position for the predefined duration. And if necessary, it may further comprise again the step 150 of sending the disengaging command 54 if the ICE restart is not successful.

According to an optional feature of the invention, the method for controlling the powertrain system 10 comprises the step 160 of disregarding an indication 55 of wheel slip caused by the service brakes 13 and/or the engagement of the controllable clutch 20 when sending 110 the restart command 51 to the internal combustion engine 11. As already explained, this step avoids that an emergency disengagement of the controllable clutch 20 occurs. This contributes to the fact that the ICE restart is prioritized.

According to an optional feature of the invention, the method for controlling the powertrain system 10 comprises the step 170 of sending a command 57 of fuel injection into the internal combustion engine 11 to an injection device 60 of the internal combustion engine 11 if a value 56 of the power output shaft 12 speed is non-zero. The non-zero value 56 of the power output shaft 12 means that the ICE 11 restart is successful. As the ICE 11 is running, it should be fed with fuel to allow the combustion to occur. Sending the command 57 enables to operate fuel injection as soon as the ICE is restarted. As this command 57 is controlled based on the rotation speed of the power output shaft, it ensures that fuel is injected when necessary, which means that fuel is injected into the cylinders not too early (i.e. not before the ICE is restarted) and not too late, as the command 57 is sent as soon as the ICE 11 is running. More precisely, during the process of restarting the engine within the scope of the invention, when the engine speed is zero and the controllable clutch is engaged towards a target position for a clutch engine start, the engine itself might start to rotate. During this stage, it does not necessarily mean the engine is running yet, because as soon as the controllable clutch will be disengaged again, the engine speed will drop unless fuel is injected.

If a clutch engine start is performed on slippery surface with the service brakes active, spinning the engine up towards a certain speed with the controllable clutch itself might be physically impossible. To counteract this, the step 170 aims at making it possible to proceed with fuel injection as soon as the slightest rotation on the engine side is detected. This step enables to support the controllable clutch getting the engine speed up to a desired speed.

According to an optional feature of the invention, the method for controlling the powertrain system 10 comprises the step 180 of sending an instruction 59 being part of a fuel injection strategy to the injection device 60 of the internal combustion engine 11, said instruction being adapted to each previously identified cylinder C1, C2, C3, C4, C5, C6, if the received power output shaft speed is non-zero. The power output shaft speed being non-zero means that the ICE 11 has restarted, thereby requiring its feeding with fuel by means of fuel injection by the injection device 60. The method of the invention may comprise a step of receiving identification data 58 from the cylinders C1, C2, C3, C4, C5, C6 of the internal combustion engine 11. These identification data 58 comprise the state of combustion for each cylinder before the previous shutdown of the ICE 11. The control unit 40 can send the instruction 59 to the injection device 60 to operate, for each cylinder, the corresponding fuel injection at a given time in accordance with the fuel injection strategy. Therefore the fuel injection in each cylinder is synchronized according to its state when the ICE 11 restarts.

According to an optional feature of the invention, the method for controlling the powertrain system 10 comprises the step 190 of setting the internal combustion engine 11, the controllable clutch 20, the geartrain 30 in the engine stop freewheeling mode if the vehicle speed 71 is greater than a predefined speed threshold. The predefined speed threshold is a function of the ratio between the gearbox output shaft 31 speed and the power output shaft 12 speed.

Doing so, the method of the invention takes into account the global vehicle speed to place the powertrain system 10 in the engine stop freewheeling mode. As the vehicle speed 71 is above a predefined speed threshold, the gearbox output shaft has a rotational speed which is high enough to ensure the ICE restart using the controllable clutch 20. If the vehicle speed cannot be maintained above the predefined speed threshold during the temporary ICE shutdown, the step 120 of sending the engaging command 52 to the controllable clutch 20 is performed to restart the ICE 11.

The powertrain system 10 of the invention and the method for controlling such a powertrain system 10 solve the problem of restarting the internal combustion engine while ensuring an adequate level of steerability of the vehicle, even in case of an emergency or hard braking event. In the engine stop freewheeling mode, the powertrain system 10 of the invention sets the priority to the restart of the engine based on the control of the controllable clutch further to such a braking event. The invention results in a fine clutch control in order to adapt the torque transfer between the internal combustion engine and the wheels.

Of course, the invention is not limited to the examples which have just been described and numerous adjustments can be made to these examples without departing from the scope of the invention. In particular, the characteristics of different variant embodiments of the invention can be combined to achieve the invention, to the extent that these variants are not incompatible with each other.

## Claims

1. A powertrain system (10) for a vehicle (1), the powertrain system being **characterized in that** it comprises:
- an internal combustion engine (11) connectable to one or more wheels (2, 3, 4, 5) of the vehicle (1),
- a controllable clutch (20),
- a geartrain (30) configured to be coupled to a power output shaft (12) of the internal combustion engine (11) by means of the controllable clutch (20), the geartrain comprising a gearbox output shaft (31) configured to be drivingly connected to at least one wheel (3, 4) of the vehicle and receive torque from the internal combustion engine (11),
- a control unit (40) configured to selectively operate at least one of the internal combustion engine (11), the controllable clutch (20), the geartrain (30) in at least an engine stop freewheeling mode, in which the power output shaft (12) of the internal combustion engine is non-rotating and the internal combustion engine (11) is disconnected from the one or more wheels (3, 4),
wherein the control unit (40) is configured to, in the engine stop freewheeling mode
- obtain real-time data (50) indicative of an emergency or hard braking event initiated by one or more service brakes (13) of the vehicle,
- based on the obtained real-time data (50), send an engaging command (52) to the controllable clutch (20),
- control the controllable clutch (20) to a target torque transfer position (53).

2. The powertrain system (10) according to claim 1, wherein the control unit (40) is further configured to monitor the controllable clutch (20) at or near the target torque transfer position (53) for a predefined duration.

3. The powertrain system (10) according to claim 2, wherein the control unit (40) is further configured to send a disengaging command (54) to the controllable clutch (20) if the power output shaft (12) does not reach a predetermined speed within the predefined duration, thereby aborting the restart of the internal combustion engine (11).

4. The powertrain system (10) according to any one of claims 1 to 3, wherein the control unit (40) is configured to receive an indication (55) of wheel slip caused by the service brakes (13) and/or the engagement of the controllable clutch (20) and disregard the indication of wheel slip when sending the engaging command (52) to the controllable clutch (20).

5. The powertrain system (10) according to any one of claims 1 to 4, wherein the control unit (40) is configured to receive a value (56) of the power output shaft (12) speed and, if the received value (56) of the power output shaft speed is non-zero, send a command (57) of fuel injection into the internal combustion engine (11) to an injection device (60) of the internal combustion engine (11).

6. The powertrain system (10) according to claim 5, wherein the control unit (40) is configured to receive identification data (58) from cylinders (C1, C2, C3, C4, C5, C6) of the internal combustion engine (11) and, if the received value (56) of the power output shaft speed is non-zero, send an instruction (59) being part of a fuel injection strategy to the injection device (60) of the internal combustion engine (11), said instruction being adapted to each cylinder (C1, C2, C3, C4, C5, C6).

7. The powertrain system (10) according to any one of claims 1 to 6, wherein the control unit (40) is configured to receive the vehicle speed (71) from an auxiliary speed sensor (70), preferably from a GNSS system embedded into the vehicle.

8. The powertrain system (10) according to any one of claims 1 to 7, wherein the control unit (40) is configured to set the internal combustion engine (11), the controllable clutch (20), the geartrain (30) in the engine stop freewheeling mode if the vehicle speed (71) is greater than a predefined speed threshold, said predefined speed threshold being a function of the ratio between the gearbox output shaft (31) speed and the power output shaft (12) speed.

9. A vehicle (1) comprising one or more wheels (2, 3, 4, 5) and a powertrain system (10) according to any one of the claims 1 to 8 connectable to at least one of the one or more wheels (2, 3, 4, 5).

10. A method for controlling a powertrain system (10) of a vehicle (1), the powertrain system (10) comprising:
- an internal combustion engine (11) connectable to one or more wheels (2, 3, 4, 5) of the vehicle,
- a controllable clutch (20),
- a geartrain (30) configured to be coupled to a power output shaft (12) of the internal combustion engine (11) by means of the controllable clutch (20), the geartrain (30) comprising a gearbox output shaft (31) configured to be drivingly connected to at least one wheel (3, 4) of the vehicle and receive torque from the internal combustion engine (11),
- a control unit (40) configured to selectively operate at least one of the internal combustion engine (11), the controllable clutch (20), the geartrain (30) in at least an engine stop freewheeling mode, in which the power output shaft (12) of the internal combustion engine is non-rotating and the internal combustion engine (11) is disconnected from the one or more wheels (3, 4),
the method for controlling the powertrain system being **characterized in that** it comprises, in the engine stop freewheeling mode, the steps of
- obtaining (100) real-time data (50) indicative of an emergency or hard braking event initiated by one or more service brakes (13) of the vehicle,
- based on the obtained real-time data (50), sending (120) an engaging command (52) to the controllable clutch (20),
- controlling (130) the controllable clutch (20) to a target torque transfer position (53).

11. The method according to claim 10, further comprising the step (140) of monitoring the controllable clutch (20) at or near the target torque transfer position (53) for a predefined duration.

12. The method according to claim 11, further comprising the step (150) of sending a disengaging command (54) to the controllable clutch (20) if the power output shaft (12) does not reach a predetermined speed within the predefined duration, thereby aborting the restart of the internal combustion engine (11).

13. The method according to any one of claims 10 to 12, comprising the step (160) of disregarding an indication (55) of wheel slip caused by the service brakes (13) and/or the engagement of the controllable clutch (20) when sending (110) the restart command (51) to the internal combustion engine (11).

14. The method according to any one of claims 10 to 13, comprising the step (170) of sending a command (57) of fuel injection into the internal combustion engine (11) to an injection device (60) of the internal combustion engine (11) if a value (56) of the power output shaft (12) speed is non-zero.

15. The method according to any one of claims 10 to 14, comprising the step (190) of setting the internal combustion engine (11), the controllable clutch (20), the geartrain (30) in the engine stop freewheeling mode if the vehicle speed (71) is greater than a predefined speed threshold, said predefined speed threshold being a function of the ratio between the gearbox output shaft (31) speed and the power output shaft (12) speed.
